# EUROPEAN PATENT APPLICATION

(11) **EP 4 067 246 A1**
(43) Date of publication of application: **05.10.2022**
(21) Application number: 20893700.3
(22) Date of filing: 10.11.2020
(51) Int. Cl.: B65B 51/10, B65B 51/22

(54) **FILLING/PACKAGING MACHINE AND LATERAL SEALING DEVICE USED IN SAME**

(30) Priority: 28.11.2019 JP 2019215192
(71) Applicant: Shikoku Kakoki Co., Ltd., Itano-gun, Tokushima 771-0287 (JP)
(72) Inventor: MORIKAWA Yasuhiro, Itano-gun, Tokushima 771-0287 (JP); SATO Seiji, Itano-gun, Tokushima 771-0287 (JP); SORA Hiroshi, Itano-gun, Tokushima 771-0287 (JP)
(74) Representative: Staeger & Sperling Partnerschaftsgesellschaft mbB
(86) International application number: PCT/JP2020/041847
(87) International publication number: WO 2021/106545

(57) **Abstract**

Provided is a lateral sealing device for a filling and packaging machine with which a sealing defect does not occur between an end edge surface of a sealing tape and an inner surface of a tube-shaped packaging material in a lateral sealing portion by ultrasonic sealing. The lateral sealing device for the filling and packaging machine includes an ultrasonic horn 17A and an anvil 17B that are provided so as to be freely openable and closable with a tube-shaped packaging material T sandwiched therebetween and respectively have seal surfaces 171 and 172 extending in a direction orthogonal to a longitudinal direction of the tube-shaped packaging material T. The seal surfaces 171 and 172 face each other. The seal surface 172 of the anvil 17B is formed with a first groove 179a extending so as to intersect with one end edge surface S1 of the sealing tape S when viewed from front during lateral sealing and a second groove 179b extending so as to intersect with the other end edge surface S2 of the sealing tape S when viewed from the front during lateral sealing.

## Description

### Technical Field

The present invention relates to a filling and packaging machine that fills and packages a content such as fluid food and a beverage in a container formed of a web-shaped packaging material mainly including paper or the like, and relates to a lateral sealing device of an ultrasonic sealing type to be used in the filling and packaging machine.

### Background Art

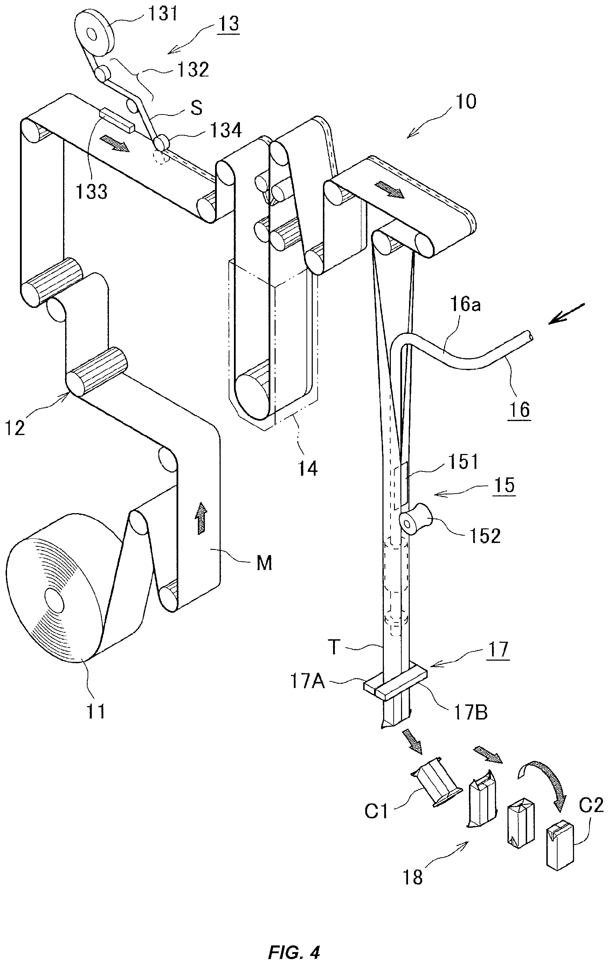

For example, there is known a filling and packaging machine illustrated in FIG. 4 that manufactures a content-filled container by filling and packaging a content such as fluid food or a beverage using a web-shaped packaging material in which sealant layers made of a thermoplastic resin are stacked on both surfaces of a base material layer made of paper or the like.

A filling and packaging machine (10) includes: a rewinder (11) that supports a web-shaped packaging material (M) wound in a roll shape; a rewinding device (12) that sequentially rewinds the web-shaped packaging material (M) from the rewinder (11); a tape attaching device (13) that attaches a sealing tape (S) made of a thermoplastic resin to one end edge portion of one surface of the rewound web-shaped packaging material (M) such that a portion of the sealing tape (S) in the width direction protrudes; a sterilizing tank (14) that sterilizes the web-shaped packaging material (M) by immersing the web-shaped packaging material (M) in a sterilizing solution such as a hydrogen peroxide solution; a longitudinal sealing device (15) that molds a tube-shaped packaging material (T) by overlapping both end edge portions of the web-shaped packaging material (M) by a predetermined width and longitudinally sealing the end edge portions and attaches the protruding portion of the sealing tape (S) to an inner surface of the tube-shaped packaging material (T) so as to cover a step (T11) (one end edge surface of the web-shaped packaging material) on an inner side of an overlapping portion (T1); a content filling device (16) that fills a fluid content into the tube-shaped packaging material (T) by a filling pipe (16a) inserted into the tube-shaped packaging material (T) from above; a lateral sealing device (17) that laterally seals the tube-shaped packaging material (T) filled with the content by a length corresponding to one container and cuts the tube-shaped packaging material (T) at a widthwise middle position of a lateral sealing portion to form a pillow-shaped content-filled container (C1) in an intermediate form; and a container completion device (18) that molds the container (C1) into a rectangular parallelepiped content-filled container (C2) as a completion form.

The tape attaching device (13) includes: a tape reel (131) around which the sealing tape (S) is wound in a roll shape; a tape rewinding device (132) that sequentially rewinds the sealing tape (S) from the tape reel (131); a heater (133) that preheats the one end edge portion of the one surface of the web-shaped packaging material (M) to which the sealing tape (S) is to be attached; and a pair of pressure bonding rollers (134) that press-bond and seal the sealing tape (S) to the one end edge portion of the one surface of the web-shaped packaging material (M).

The longitudinal sealing device (15) includes: a heater (151) that preheats both end edge portions of the web-shaped packaging material (M) and the sealing tape (S) in an intermediate process where the web-shaped packaging material (M) is molded into a tube shape by a molding roll (not illustrated); and a pair of pressure bonding rollers (152) that press-bond and seal both end edge portions of the web-shaped packaging material (M) that are overlapped with each other and the sealing tape (S).

As the lateral sealing device (17), a thermal sealing device, a high-frequency sealing device, an ultrasonic sealing device, and the like are known.

For example, as disclosed in PTL 1 and PTL 2 below, the lateral sealing device (17) of an ultrasonic sealing type includes an ultrasonic horn (17A) and an anvil (17B) that are arranged so as to be freely openable and closable with the tube-shaped packaging material (T) sandwiched therebetween. The ultrasonic horn (17A) and the anvil (17B) respectively have a seal surface extending in a direction orthogonal to a longitudinal direction of the tube-shaped packaging material (T). The seal surfaces of the ultrasonic horn (17A) and the anvil (17B) face each other. Although not illustrated in the drawings, the ultrasonic horn (17A) and the anvil (17B) are provided with molding flaps that preliminarily mold the tube-shaped packaging material (T) into a predetermined container shape (for example, a container shape having a square cross section) by sandwiching the tube-shaped packaging material (T) from two sides thereof.

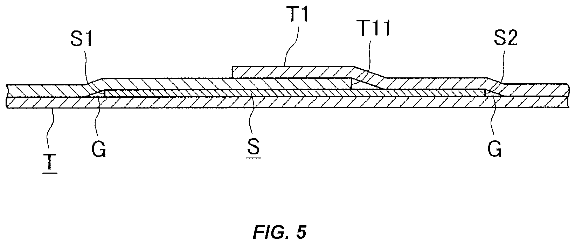

During lateral sealing, the tube-shaped packaging material (T) is locally sandwiched and deformed by the seal surfaces of the ultrasonic horn (17A) and the anvil (17B) at a predetermined height position with a predetermined pressing force, and an ultrasonic oscillator is operated in a state where two packaging material (T) parts deformed into a flat shape are press-bonded to each other. Thus, as illustrated in FIG. 5, inner surfaces of the two press-bonded packaging material (T) parts are fused to each other, and the sealing tape (S) is fused to the inner surface of the packaging material (T) part on a side opposite to the overlapping portion (T1).

### Citation list

### Patent Literature

PTL 1: Japanese Patent No. 4282179
PTL2: Japanese Patent No. 4316053

### Summary of Invention

### Technical Problem

Here, in the lateral sealing portion formed by the lateral sealing device (17), both end edge surfaces (S1) and (S2) of the sealing tape (S) are usually also fused to the inner surfaces of the packaging material (T) parts.

However, depending on a type of the sealing tape (S), for example, when a hard material is used as the material of the sealing tape (S) or a thickness of the sealing tape (S) is large, in rare cases, the end edge surfaces (S1) and (S2) of the sealing tape (S) and the inner surfaces of the packaging material (T) parts are not fused to each other, as illustrated in FIG. 5, penetrating cavities (G) are generated between the end edge surfaces (S1) and (S2) and the inner surfaces of the packaging material (T), and a sealing defect in which the content leaks through the cavities (G) occurs.

The invention is made in view of the above-mentioned problem, and an object of the invention is to provide a lateral sealing device capable of reliably preventing a sealing defect between end edge surfaces of a sealing tape and inner surfaces of a tube-shaped packaging material in a lateral sealing portion formed by ultrasonic sealing regardless of a type of a sealing tape, and a filling and packaging machine including the lateral sealing device.

### Solution to Problem

In order to achieve the above-mentioned object, the invention includes the following aspects.
1) A lateral sealing device for a filling and packaging machine that fills and packages a content in a container formed of a web-shaped packaging material having a sealant layer on both sides thereof, the lateral sealing device being configured to laterally seal, in the filling and packaging machine, a tube-shaped packaging material by a length of one container in a state where the content is filled in the tube-shaped packaging material, the tube-shaped packaging material having a tube shape by overlapping both end edge portions of the web-shaped packaging material by a predetermined width and longitudinally sealing the end edge portions, and a sealing tape being attached to an inner surface of the tube-shaped packaging material so as to cover a step on an inner side of an overlapping portion, the lateral sealing device including:
   an ultrasonic horn and an anvil that are freely openable and closable with the tube-shaped packaging material sandwiched therebetween and respectively have a seal surface extending in a direction orthogonal to a longitudinal direction of the tube-shaped packaging material, the seal surface of the ultrasonic horn and the seal surface of the anvil facing each other, in which
   the seal surface of one of the ultrasonic horn and the anvil is formed with a first groove extending so as to intersect with one end edge surface of the sealing tape when viewed from front during lateral sealing and a second groove extending so as to intersect with the other end edge surface of the sealing tape when viewed from the front during lateral sealing.
2) The lateral sealing device for the filling and packaging machine according to the above-mentioned 1), in which
   the first groove includes one inclined groove or a plurality of inclined grooves parallel to each other extending so as to obliquely intersect with the one end edge surface of the sealing tape when viewed from the front during lateral sealing, and the second groove includes one inclined groove or a plurality of inclined grooves parallel to each other extending so as to obliquely intersect with the other end edge surface of the sealing tape when viewed from the front during lateral sealing.
3) A filling and packaging machine including:
   a tape attaching device configured to attach a sealing tape to one end edge portion of one surface of a web-shaped packaging material having a sealant layer on both surfaces thereof such that a portion of the sealing tape in a width direction protrudes;
   a longitudinal sealing device configured to mold a tube-shaped packaging material by overlapping both end edge portions of the web-shaped packaging material by a predetermined width and longitudinally sealing the end edge portions, and to attach the protruding portion of the sealing tape to an inner surface of the tube-shaped packaging material so as to cover a step on an inner side of an overlapping portion; and
   a lateral sealing device that includes an ultrasonic horn and an anvil that are freely openable and closable with the tube-shaped packaging material sandwiched therebetween and respectively have a seal surface extending in a direction orthogonal to a longitudinal direction of the tube-shaped packaging material, the seal surface of the ultrasonic horn and the seal surface of the anvil facing each other, the lateral sealing device being configured to laterally seal the tube-shaped packaging material filled with a content by a length of one container, in which
   the lateral sealing device includes the lateral sealing device according to the above-mentioned 1) or 2).

### Advantageous Effect

According to the lateral sealing device for the filling and packaging machine of the above-mentioned 1), during lateral sealing, even in a case where the end edge surfaces of the sealing tape and the inner surfaces of the two flat packaging material parts in which the tube-shaped packaging material is crushed and press-bonded are not fused to each other and penetrating cavities are generated therebetween, occurrence of a sealing defect is reliably prevented in the following manner.

That is, in locations of the above-mentioned two packaging material parts corresponding to the first groove and the second groove, a pressing force applied by the seal surfaces of the ultrasonic horn and the anvil is weak. As a result, passages are formed between the two press-bonded packaging material parts so as to intersect with end edge surfaces of the sealing tape. A molten resin obtained by melting a part of a thermoplastic resin constituting the sealant layer on an inner surface side of the tube-shaped packaging material by ultrasonic vibration moves in the passages and flows into the cavities facing the end edge surfaces of the sealing tape. Accordingly, the cavities are filled with the resin, so that the content does not leak out through the cavities.

According to the lateral sealing device for the filling and packaging machine of the above-mentioned 2), an effect of preventing the occurrence of the sealing defect of the lateral sealing portion described above can be more reliably obtained.

According to the filling and packaging machine of the above-mentioned 3), by using the lateral sealing device of the above-mentioned 1) or 2), it is possible to reliably prevent the occurrence of the sealing defect of the lateral sealing portion regardless of the type of the sealing tape.

### Brief Description of Drawings

[FIG. 1] FIG. 1 illustrates a lateral sealing device for a filling and packaging machine according to an embodiment of the invention, in which (a) is an enlarged horizontal sectional view of a part of the lateral sealing device, and (b) is an enlarged front view of a part of an anvil taken along a line b-b of (a).
[FIG. 2] FIG. 2 is an enlarged vertical sectional view of a part of the lateral sealing device taken along a line II-II in FIG. 1.
[FIG. 3] FIG. 3 is an enlarged vertical sectional view of a part of the lateral sealing device taken along a line III-III in FIG. 1.
[FIG. 4] FIG. 4 is a perspective view schematically illustrating a whole filling and packaging machine in the related art.
[FIG. 5] FIG. 5 is an enlarged horizontal sectional view illustrating a part of a lateral sealing portion formed by a lateral sealing device of the filling and packaging machine in the related art.

### Description of Embodiments

Hereinafter, an embodiment of the invention will be described with reference to the drawings.

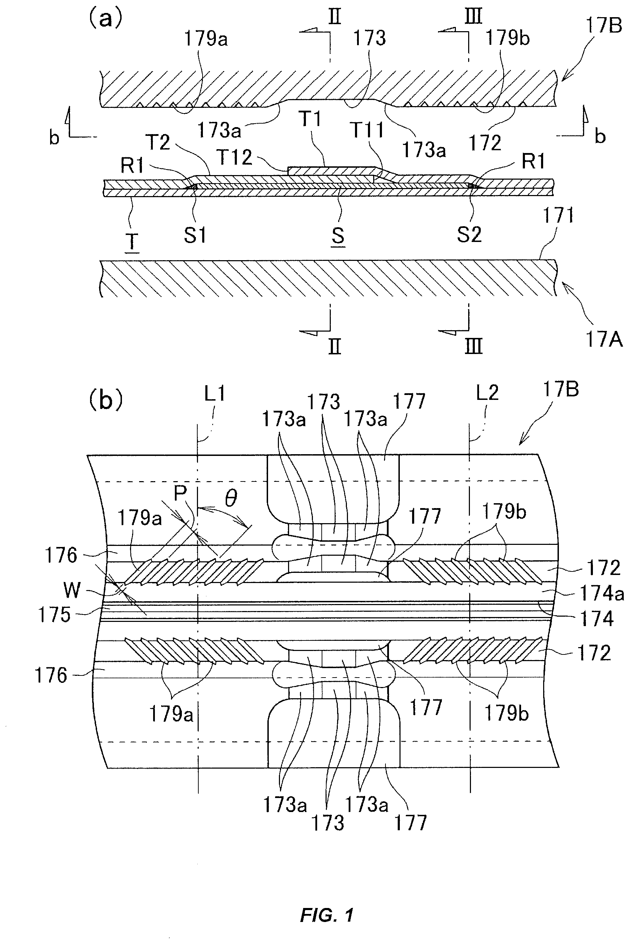

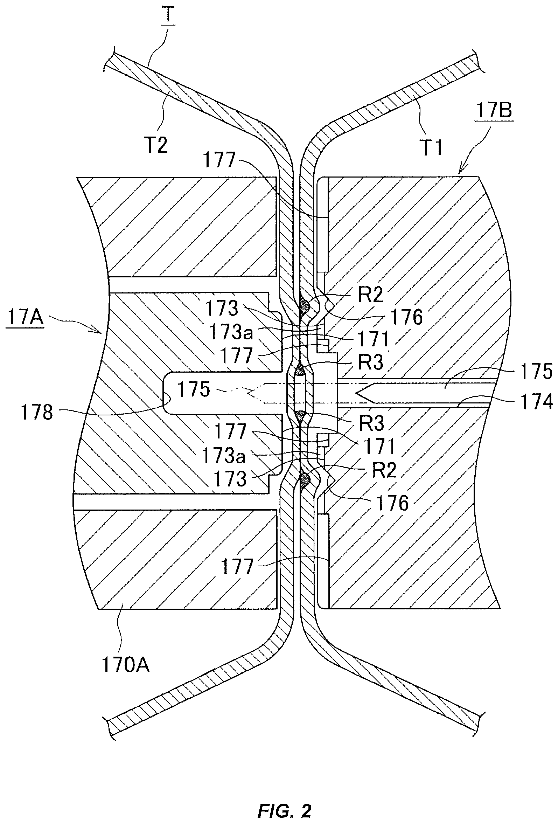

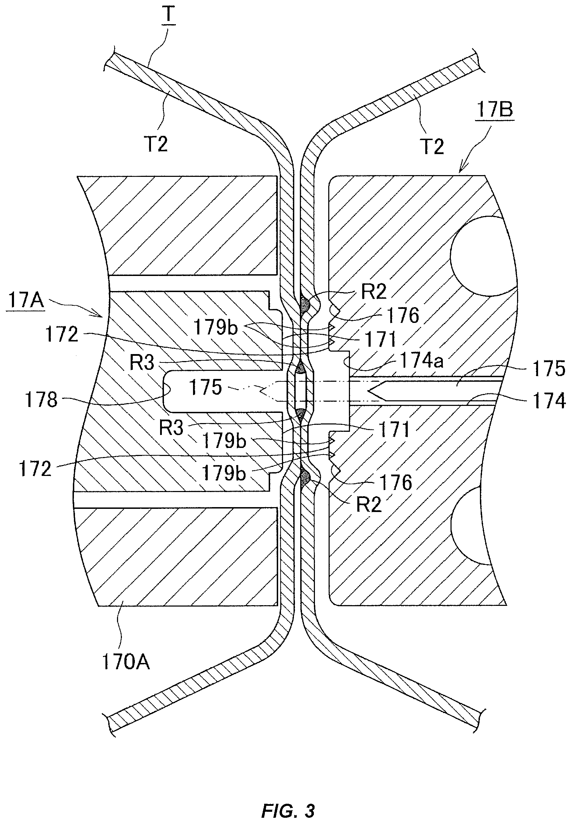

FIGS. 1 to 3 illustrate details of a lateral sealing device for a filling and packaging machine according to the embodiment of the invention. In FIGS. 2 and 3, two overlapping parts of an overlapping portion (T1) of a tube-shaped packaging material (T) and a sealing tape (S) are not illustrated.

A structure of the filling and packaging machine according to the embodiment is substantially the same as that of the related art described above with reference to FIG. 4 except for a detailed structure of the later-described lateral sealing device, and therefore, redundant description will be omitted.

As illustrated in FIGS. 1 to 3, an ultrasonic horn (17A) and an anvil (17B) of the lateral sealing device are formed of metal bars extending in a direction orthogonal to a longitudinal direction of the tube-shaped packaging material (T) and facing each other with the tube-shaped packaging material (T) sandwiched therebetween.

The ultrasonic horn (17A) has, on an inner surface facing the tube-shaped packaging material (T), upper and lower two belt-shaped seal surfaces (171) extending parallel to each other along the longitudinal direction. A cutter escape groove (178) is formed between the two seal surfaces (171).

The ultrasonic horn (17A) is accommodated in a stopper (170A) made of a hollow bar having an opening on the inner surface facing the tube-shaped packaging material (T) such that the seal surfaces (171) slightly protrude from the opening.

Although not illustrated in detail, high-frequency electrical energy generated from an ultrasonic oscillator is converted into mechanical vibration energy by a converter, and the mechanical vibration energy is increased or decreased by a booster and then transmitted to the ultrasonic horn (17A), whereby the tube-shaped packaging material (T) is vibrated at a required amplitude through the ultrasonic horn (17A).

The anvil (17B) has, on an inner surface facing the tube-shaped packaging material (T), upper and lower two belt-shaped seal surfaces (172) extending parallel to each other along the longitudinal direction and facing the two seal surfaces (171) of the ultrasonic horn (17A).

In a slit (174) formed between the two seal surfaces (172), a cutter (175) that cuts a lateral sealing portion at a widthwise middle position is accommodated so as to freely protrude and retract. A step (174a) facing the ultrasonic horn (17A) and perpendicular to a depth direction of the slit (174) is formed at upper and lower edge portions of the opening of the slit (174).

In an upper adjacent portion of the upper seal surface (172) and a lower adjacent portion of the lower seal surface (172), horizontal grooves (176) each having a V-shaped cross section extending along the longitudinal direction of the seal surfaces (172) are formed, respectively. The horizontal grooves (176) are used for forming, at locations adjacent to inner surfaces of two flat packaging material (T) parts to be fused to each other by lateral sealing, resin reservoirs (R2) by pushing out a part of a molten thermoplastic resin constituting a sealant layer on the inner surfaces of the two flat packaging material (T) parts. As illustrated in FIGS. 2 and 3, the upper seal surfaces (171) of the ultrasonic horn (17A) is formed such that an upper end edge thereof is located at substantially the same height position as a width center portion of the upper horizontal groove (176) of the anvil (17B), and the lower seal surface (171) of the ultrasonic horn (17A) is formed such that a lower end edge thereof is located at substantially the same height position as a width center portion of the lower horizontal groove (176) of the anvil (17B). With arrangements of the two seal surfaces (171), the above-mentioned resin reservoirs (R2) are easily formed. Sealing performance of the lateral sealing portion can be improved by presence of the resin reservoirs (R2). As illustrated in FIGS. 2 and 3, similar resin reservoirs (R3) are also formed in cutting side portions of the tube-shaped packaging material (T) opposite to the resin reservoirs (R2) across the two flat packaging material (T) parts to be laterally sealed.

Absorbing portions (173) that absorb steps (T11) and (T12) generated between the overlapping portion (T1) and the other portion (T2) of the tube-shaped packaging material (T) are formed in corresponding central portions of the upper and lower seal surfaces (172) of the anvil (17B) in the longitudinal direction. The absorbing portions (173) are concave grooves (173) each having an isosceles trapezoidal cross section extending in a vertical direction perpendicular to the longitudinal direction of the two seal surfaces (172). During lateral sealing, usually, the step (T11) on an inner side and the step (T12) on an outer side of the overlapping portion (T1) of the tube-shaped packaging material (T) (in other words, end surfaces of the packaging material (T) forming these steps) are respectively located on inclined surfaces (173a) on both sides of the concave groove (173). Concave portions (177) slightly deeper than the concave grooves (173) are respectively formed on upper and lower sides of the concave grooves (173).

The absorbing portions are not limited to the illustrated form, and may be, for example, concave grooves each having a concave arc-shaped cross section, or concave and convex portions each having a wave shape cross section. The absorbing portions may be formed on the seal surfaces of the ultrasonic horn. Further, the absorbing portions may not be formed on the seal surfaces.

A first groove (179a) extending so as to intersect with one end edge surface (S1) (left side in FIG. 1) of the sealing tape (S) when viewed from the front during lateral sealing and a second groove (179b) extending so as to intersect with the other end edge surface (S2) (right side in FIG. 1) of the sealing tape (S) when viewed from the front during lateral sealing are formed in each of the upper and lower seal surfaces (172) of the anvil (17B). In (b) of FIG. 1, a position of the one end edge surface (S1) (the left side in FIG. 1) of the sealing tape (S) is illustrated by a chain line (L1), and a position of the other end edge surface (S2) (the right side in FIG. 1) is illustrated by a chain line (L2). The term "viewed from the front" refers to a state as viewed from a side facing the seal surfaces (172) (for example, the left side in FIGS. 2 and 3).

As described above, during lateral sealing of the tube-shaped packaging material (T) performed by the lateral sealing device (17), the end edge surfaces (S1) and (S2) of the sealing tape (S) and the inner surfaces of the two flat packaging material (T) parts in which the tube-shaped packaging material (T) is crushed and press-bonded are not fused to each other and penetrating cavities (G) may be generated between the two flat packaging material (T) parts (see FIG. 5). However, even in such a case, the first groove (179a) and the second groove (179b) formed in each of the upper and lower seal surfaces (172) of the anvil (17B) achieve the following operation and effects, thereby reliably preventing the occurrence of a sealing defect. That is, in locations of the two press-bonded packaging material (T) parts that correspond to the first groove (179a) and the second groove (179b), a pressing force by the seal surfaces (171) and (172) of the ultrasonic horn (17A) and the anvil (17B) is weak. As a result, passages are formed between the two press-bonded packaging material (T) parts so as to intersect with the end edge surfaces (S1) and (S2) of the sealing tape (S). A molten resin obtained by melting a part of a thermoplastic resin constituting a sealant layer on an inner surface side of the tube-shaped packaging material (T) by ultrasonic vibration moves in the passages and flows into cavities facing the end edge surfaces (S1) and (S2) of the sealing tape (S). Accordingly, the cavities are filled with the resin (R1), so that a content does not leak out through the cavities.

In the present embodiment, the first groove (179a) includes a plurality of mutually parallel inclined grooves extending so as to obliquely intersect with the one end edge surface (S1) of the sealing tape (S) when viewed from the front during lateral sealing. The second groove (179b) includes a plurality of mutually parallel inclined grooves extending so as to obliquely intersect with the other end edge surface (S2) of the sealing tape (S) when viewed from the front during lateral sealing.

In the passages formed at the locations corresponding to the first groove (179a) and the second groove (179b) in the two press-bonded packaging material (T) parts, the molten resin flows toward both a liquid contact side and a cutting side. Then, the flow of the molten resin collides with the end edge surfaces (S1) and (S2) of the sealing tape (S) so as to fill the cavities.

Therefore, when directions of the first groove (179a) and the second groove (179b) are set to be vertically and horizontally symmetrical as illustrated in (b) of FIG. 1, patterns of the flow of the molten resin with respect to the end edge surfaces (S1) and (S2) of the sealing tape (S) are the same, so that sealing conditions for a portion to be laterally sealed can be made uniform.

Considering that the sealing conditions are to be made uniform, inclined directions of the grooves (179a) and (179b) may extend in a direction opposite to that in (b) of FIG. 1.

However, in a case where the directions of the first groove (179a) and the second groove (179b) are set as illustrated in (b) of FIG. 1, a probability that the flow of the molten resin toward the liquid contact side hits the end edge surfaces (S1) and (S2) of the sealing tape (S) is higher than that in a case where the directions are opposite to those in (b) of FIG. 1, so that the cavities facing the end edge surfaces (S1) and (S2) of the sealing tape (S) are filled with the resin (R1) at a location closer to the liquid contact side, and thus it is considered that the content can be more reliably prevented from leaking through the cavities.

The first groove (179a) and the second groove (179b) cross the upper and lower seal surfaces (172). However, the first groove (179a) and the second groove (179b) may have a non-transverse shape that does not reach one or both of the upper and lower edges of the upper and lower seal surfaces (172). In particular, when the grooves (179a) and (179b) do not reach one of the upper and lower edges of each of the upper and lower seal surfaces (172), in other words, when one end of each of the grooves (179a) and (179b) is blocked, it is considered that the flow direction of the molten resin can be controlled.

It is sufficient that at least one first groove (179a) and at least one second groove (179b) are formed in each of the upper and lower seal surfaces (172). However, if a plurality of first grooves (179a) and a plurality of second grooves (179b) are formed at intervals as in the above-mentioned embodiment, even in a case where the position of the sealing tape (S) is shifted along the longitudinal direction of the upper and lower seal surfaces (172) during lateral sealing, it is possible to more reliably obtain an effect of preventing the occurrence of a sealing defect by filling the cavities generated at positions facing the end edge surfaces (S1) and (S2) of the sealing tape (S) with the resin (R1). The plurality of inclined grooves constituting the first groove (179a) and the second groove (179b) may be arranged in parallel with each other at an equal pitch as illustrated in FIG. 1, or some or all of the inclined grooves may be non-parallel or the pitch may be changed.

The first groove (179a) and the second groove (179b) may be curved grooves, crank grooves, or wavy-line-shaped grooves, in addition to the oblique straight grooves as in the above-mentioned embodiment. In addition, as the first groove (179a) and the second groove (179b), a configuration mode may be adopted in which a plurality of grooves having a V shape or a Y shape when viewed from the front are alternately arranged in vertically opposite directions along the longitudinal direction of the seal surfaces (172).

The first groove (179a) and the second groove (179b) may be formed on the seal surfaces (172) of the anvil (17B) as in the above-mentioned embodiment, or may be formed on the seal surfaces (171) of the ultrasonic horn (17A).

Next, a preferred configuration mode of the first groove (179a) and the second groove (179b) of the lateral sealing device of the above-mentioned embodiment will be described. The following configuration mode illustrates the first groove (179a) and the second groove (179b) in each of the upper and lower seal surfaces (172) of the anvil (17B).

A width (W) of the first groove (179a) and the second groove (179b) is preferably 0.05 to 0.4 mm, and more preferably 0.1 to 0.3 mm. When the width (W) is less than 0.05 mm, the molten resin is less likely to flow toward the end edge surfaces (S1) and (S2) of the sealing tape (S), and the cavities generated at the positions facing the end edge surfaces (S1) and (S2) of the sealing tape (S) may not be filled. On the other hand, when the width (W) exceeds 0.4 mm, a flow velocity of the molten resin flowing toward the end edge surfaces (S1) and (S2) of the sealing tape (S) is small, and the cavities generated at the positions facing the end edge surfaces (S1) and (S2) of the sealing tape (S) may not be filled with the resin (R1), and an area of the seal surfaces (172) may decrease, which may affect the sealing performance.

A depth (D) of the first groove (179a) and the second groove (179b) is preferably 0.03 to 0.4 mm, and more preferably 0.05 to 0.2 mm. When the depth (D) is less than 0.03 mm, the molten resin is less likely to flow toward the end edge surfaces (S1) and (S2) of the sealing tape (S), and the cavities generated at the positions facing the end edge surfaces (S1) and (S2) of the sealing tape (S) may not be filled. On the other hand, when the depth (D) exceeds 0.4 mm, a flow velocity of the molten resin flowing toward the end edge surfaces (S1) and (S2) of the sealing tape (S) is small, and the cavities generated at the positions facing the end edge surfaces (S1) and (S2) of the sealing tape (S) may not be filled with the resin (R1).

A cross-sectional shape of the first groove (179a) and the second groove (179b) may be, for example, a V shape, a U shape, or an arc shape, and is preferably a V shape, so that it is considered that the molten resin easily flows toward the end edge surfaces (S1) and (S2) of the sealing tape (S).

An inclination (θ) of the first groove (179a) and the second groove (179b) with respect to each of the end edge surfaces (S1) and (S2) of the sealing tape (S) is preferably 25° to 80°, and more preferably 35° to 55°. When the inclination (θ) is less than 25°, it is necessary to increase the number of first grooves (179a) and the number of second grooves (179b) in consideration of an amount of deviation of the sealing tape (S), and the sealing performance at locations other than the locations corresponding to the end edge surfaces (S1) and (S2) of the sealing tape (S) may be affected. On the other hand, when the inclination (θ) exceeds 80°, the molten resin may be less likely to flow toward the end edge surfaces (S1) and (S2) of the sealing tape (S). When each of the number of first grooves (179a) and the number of second grooves (179b) is one, the inclination (θ) of the first groove (179a) and the second groove (179b) with respect to the end edge surfaces (S1) and (S2) of the sealing tape (S) is preferably 55° or more in consideration of the amount of deviation of the sealing tape (S).

Each of the number of first grooves (179a) and the number of second grooves (179b) is preferably 2 to 10, and more preferably 4 to 8. When each of the number of first grooves (179a) and the number of second grooves (179b) is one, it may be not possible to cope with an assumed amount of deviation of the sealing tape (S). On the other hand, when each of the number of first grooves (179a) and the number of second grooves (179b) is more than 10, the sealing performance at locations other than the locations corresponding to the end edge surfaces (S1) and (S2) of the sealing tape (S) may be affected.

A pitch (P) of the first groove (179a) and the second groove (179b) is preferably 0.2 to 0.8 mm, and more preferably 0.3 to 0.7 mm. When the pitch (P) is less than 0.2 mm, a sealing area is fairly small, and a sealing defect may occur. On the other hand, when the pitch (P) exceeds 0.8 mm, the cavities generated at the positions facing the end edge surfaces (S1) and (S2) of the sealing tape (S) may not be filled with the resin (R1).

### Industrial Applicability

The invention is suitably used as a filling and packaging machine that fills and packages a content such as fluid food and a beverage in a container formed of a web-shaped packaging material mainly including paper or the like, and as a lateral sealing device of an ultrasonic sealing type to be used in the filling and packaging machine.

### Reference Sign List

(10): filling and packaging machine
(13): tape attaching device
(15): longitudinal sealing device
(17): lateral sealing device
(17A): ultrasonic horn
(171): seal surface (of ultrasonic horn)
(17B): anvil
(172): seal surface (of anvil)
(179a): first groove
(179b): second groove
(M): web-shaped packaging material
(T): tube-shaped packaging material
(T1): overlapping portion
(T11): step on inner side
(S): sealing tape
(S1): one end edge surface
(S2): the other end edge surface

## Claims

1. A lateral sealing device for a filling and packaging machine that fills and packages a content in a container formed of a web-shaped packaging material having a sealant layer on both sides thereof, the lateral sealing device being configured to laterally seal, in the filling and packaging machine, a tube-shaped packaging material by a length of one container in a state where the content is filled in the tube-shaped packaging material, the tube-shaped packaging material having a tube shape by overlapping both end edge portions of the web-shaped packaging material by a predetermined width and longitudinally sealing the end edge portions, a sealing tape being attached to an inner surface of the tube-shaped packaging material so as to cover a step on an inner side of an overlapping portion, the lateral sealing device comprising:
an ultrasonic horn and an anvil that are provided to be freely openable and closable with the tube-shaped packaging material sandwiched therebetween and respectively have a seal surface extending in a direction orthogonal to a longitudinal direction of the tube-shaped packaging material, the seal surface of the ultrasonic horn and the seal surface of the anvil facing each other, wherein
the seal surface of one of the ultrasonic horn and the anvil is formed with a first groove extending so as to intersect with one end edge surface of the sealing tape when viewed from front during lateral sealing and a second groove extending so as to intersect with the other end edge surface of the sealing tape when viewed from the front during lateral sealing.

2. The lateral sealing device for the filling and packaging machine according to claim 1, wherein
the first groove includes one inclined groove or a plurality of inclined grooves parallel to each other extending so as to obliquely intersect with the one end edge surface of the sealing tape when viewed from the front during lateral sealing, and the second groove includes one inclined groove or a plurality of inclined grooves parallel to each other extending so as to obliquely intersect with the other end edge surface of the sealing tape when viewed from the front during lateral sealing.

3. A filling and packaging machine comprising:
a tape attaching device configured to attach a sealing tape to one end edge portion of one surface of a web-shaped packaging material having a sealant layer on both surfaces thereof such that a portion of the sealing tape in a width direction protrudes;
a longitudinal sealing device configured to mold a tube-shaped packaging material by overlapping both end edge portions of the web-shaped packaging material by a predetermined width and longitudinally sealing the end edge portions, and to attach the protruding portion of the sealing tape to an inner surface of the tube-shaped packaging material so as to cover a step on an inner side of an overlapping portion; and
a lateral sealing device that includes an ultrasonic horn and an anvil that are provided so as to be freely openable and closable with the tube-shaped packaging material sandwiched therebetween and respectively have a seal surface extending in a direction orthogonal to a longitudinal direction of the tube-shaped packaging material, the seal surface of the ultrasonic horn and the seal surface of the anvil facing each other, the lateral sealing device being configured to laterally seal the tube-shaped packaging material filled with a content by a length of one container, wherein
the lateral sealing device includes the lateral sealing device according to claim 1 or 2.
